# EUROPEAN PATENT SPECIFICATION

(11) **EP 2 292 474 B1**
(45) Date of publication and mention of the grant of the patent: **25.12.2013**
(21) Application number: 10174855.6
(22) Date of filing: 01.09.2010
(51) Int. Cl.: B60R 19/34

(54) **Impact absorbing member for vehicle**
Stoßdämpfendes Element für ein Fahrzeug
Élément d'absorption d'impact pour véhicule

(30) Priority: 02.09.2009 JP 2009202178
(43) Date of publication of application: 09.03.2011
(73) Proprietor: Toyoda Iron Works Co., Ltd., Toyota-shi Aichi 471-8507 (JP)
(72) Inventor: Nakanishi, Makoto, Toyota-shi Aichi 471-8507 (JP)
(74) Representative: TBK

(56) References cited:
- EP-A2- 1 640 224
- WO-A1-2007/086787

## Description

### BACKGROUND OF THE INVENTION

### 1. Field of the Invention

The invention relates to an impact absorbing member for a vehicle, and particularly to a technology in which impact energy absorbing performance is stably obtained when an impact absorbing member for a vehicle includes an asymmetric taper portion according to the preamble of claim 1, the features of which are known from document EP 1 640 224 A2.

### 2. Description of the Related Art

An impact absorbing member for a vehicle, which includes a hollow cylindrical body, is known. The cylindrical body has a plurality of side walls in the form of flat plates, and has a polygonal section. The impact absorbing member is disposed between a vehicle body-side member and a bumper member in a manner such that an axial direction of the cylindrical body coincides with a front-rear direction of a vehicle,. The impact absorbing member absorbs impact energy by being crushed into an accordion shape when the impact absorbing member receives a compression load in the axial direction. A device described in Japanese Patent Application Publication No. 2006-123887 (JP-A-2006-123887) is an example of the impact absorbing member for a vehicle. The device includes a cylindrical body with a substantially octagonal section, and the cylindrical body is constituted by paired half bodies each of which has a shape obtained by dividing the cylindrical body into upper and lower halves. While both of side end edge portions of one of the paired half bodies are overlapped with both of side end edge portions of the other of the paired half bodies, respectively, to form a cylindrical shape, both of the side end edge portions of the paired half bodies are discontinuously joined at points located at predetermined intervals in an axial direction, by spot welding. In the impact absorbing member for a vehicle, stress concentration portions are provided so that the stress concentration portions and joining points, at which the side end edge portions are joined to each other by spot welding, are alternately positioned in the axial direction. When the impact absorbing member is crushed into the accordion shape, the stress concentration portions serve as starting points at which plastic deformation starts, so that the impact absorbing member is smoothly crushed. Each of the stress concentration portions is a recessed groove that extends in a direction perpendicular to the axial direction, and that is inwardly recessed. Each of the stress concentration portions extends to straddle two adjacent ridge lines of the cylindrical body with the polygonal section.

One kind of the impact absorbing member for a vehicle includes an asymmetric taper portion in which at least one of paired side walls, which are located on sides opposite to each other, and face each other, is inclined in the axial direction, depending on, for example, the sizes of the bumper member and the vehicle body-side member, and a positional relation between the bumper member and the vehicle body-side member in a top-bottom direction. For example, in the case where the size of the bumper member in the top-bottom direction is smaller than that of the vehicle body-side member, while an upper side wall that is located at an upper position and extends in a front-rear direction of the vehicle is substantially horizontal, a lower side wall located at a lower position is inclined upward in a direction toward the bumper member.

However, when the impact absorbing member includes the taper portion, imbalance in load transmission occurs, and crush behavior becomes unstable when the impact absorbing member is crushed into the accordion shape. Thus, impact energy absorbing performance may be impaired. It is effective to provide the stress concentration portion to stabilize the crush behavior when the impact absorbing member is crushed into the accordion shape. However, in the device described in Japanese Patent Application Publication No. 2006-123887, because each of the stress concentration portions is provided to include the ridge line portions of the cylindrical body with the polygonal section, influence on the impact energy absorbing performance is large. Therefore, a plate thickness needs to be large to ensure desired impact energy absorbing performance. In addition, it is difficult to tune the position, size, shape, and the like of the stress concentration portion to stabilize the crush behavior while ensuring the impact energy absorbing performance.

### SUMMARY OF THE INVENTION

The invention has been made under such circumstances and an object of the invention is to stabilize crush behavior to stably obtain predetermined impact energy absorbing performance when a cylindrical body includes an asymmetric taper portion, and to make it possible to easily tune a stress concentration portion to stabilize the crush behavior.

The object indicated above can be achieved according to the first aspect of the invention, which provides an impact absorbing member for a vehicle, which includes a hollow cylindrical body that has a plurality of side walls in a form of flat plates and has a polygonal section, wherein the impact absorbing member is disposed between a vehicle body-side member and a bumper member, in a manner such that an axial direction of the cylindrical body coincides with a front-rear direction of a vehicle, and the impact absorbing member absorbs impact energy by being crushed into an accordion shape when the impact absorbing member receives a compression load in the axial direction, the cylindrical body including, (a) paired side end edge portions being overlapped with each other by a predetermined width in a first side wall in a form of a flat plate, and integrally joined to each other along the axial direction, whereby forming the closed polygonal section; (b) an asymmetric taper portion in which a second side wall, which is located on a side opposite to the first side wall to face the first side wall, is inclined in the axial direction more greatly with respect to the axial direction than the first side wall; and (c) a stress concentration portion provided at an overlapping portion at which the side end edge portions are overlapped with each other in the first side wall such that the stress concentration portion does not reach a ridge line of the cylindrical body with the polygonal section, and serving as a starting point at which plastic deformation starts when the impact absorbing member is crushed into the accordion shape.

The object indicated above can be achieved according to the second aspect of the invention, which provides the impact absorbing member for a vehicle according to the first aspect of the invention, wherein (a) in the taper portion, at least the second side wall is inclined with respect to the axial direction so that a distance between the first side wall and the second side wall decreases in a direction from the vehicle body-side member toward the bumper member; (b) the paired side end edge portions in the first side wall are discontinuously joined to each other at joining points located at predetermined intervals in the axial direction by spot welding; and (c) the stress concentration portion is provided at at least a position between a first joining point that is closest to an end portion on a side of the bumper member, and a second joining point that is the second closest to the end portion, among a plurality of joining points at which the paired side end edge portions are joined to each other by the spot welding.

The object indicated above can be achieved according to the third aspect of the invention, which provides the impact absorbing member for a vehicle according to the first or second aspect of the invention, wherein (a) the cylindrical body is constituted by paired half bodies each of which has a shape obtained by substantially symmetrically dividing the cylindrical body in half along a direction parallel to the axial direction, and the cylindrical body is formed by overlapping both of the side end edge portions of one of the paired half bodies with the both of the side end edge portions of other of the paired half bodies, respectively, to form a cylindrical shape, and integrally joining the both of the side end edge portions of the one of the paired half bodies to the both of the side end edge portions of the other of the paired half bodies, respectively, by spot welding; and (b) two side walls constituted by the both of the side end edge portions of the paired half bodies joined by the spot welding are the fist side wall and the second side wall.

The object indicated above can be achieved according to fourth aspect of the invention, which provides the impact absorbing member for a vehicle according to any one of the first to third aspects of the invention, wherein (a) the cylindrical body includes a substantially horizontal upper side wall that is located at an upper position and extends in the front-rear direction of the vehicle, and a lower side wall that is located at a lower position, and is inclined upward over an entire length in the axial direction so that a distance between the upper side wall and the lower side wall decreases in a direction toward the bumper member, and (b) the upper side wall is the first side wall, the lower side wall is the second side wall, and the entire upper side wall and the entire lower side wall form the taper portion.

According to the first aspect of the invention, in the impact absorbing member for a vehicle, the stress concentration portion is provided at the overlapping portion at which the paired side end edge portions are overlapped with each other in the first side wall such that the stress concentration portion does not reach the ridge line of the cylindrical body with the polygonal section. Therefore, as compared to the case where the stress concentration portion is provided to include the ridge line of the cylindrical body with the polygonal section, or the stress concentration portion is provided in a side wall portion constituted by one plate material, influence on the impact energy absorbing performance is small. Thus, it is possible to easily tune the position, size and shape, and the like of the stress concentration portion to stabilize the crush behavior, while ensuring desired impact energy absorbing performance. The first side wall and the second side wall constitute the asymmetric taper portion, and the inclination of the first side wall is comparatively small or 0 (parallel to the axial direction), and thus, a large compression load is applied to the first side wall. Therefore, it is possible to appropriately change the crush behavior by tuning the stress concentration portion provided in the first side wall. Thus, in the cylindrical body with the taper shape whose crush behavior is easy to be unstable due to the imbalance in the load transmission, the crush behavior can be easily stabilized by tuning the stress concentration portion, and desired impact energy absorbing performance can be stably obtained.

According to the second aspect of the invention, the impact absorbing member includes the taper portion in which at least the second side wall is inclined upward so that the distance between the first side wall and the second side wall decreases in the direction from the vehicle body-side member toward the bumper member. The paired side end edge portions in the first side wall are discontinuously joined to each other at the joining points located at the predetermined intervals in the axial direction by spot welding. The stress concentration portion is provided at least between the first joining point that is closest to the end portion of the bumper member side and the second joining point that is the second closest to the end portion of the bumper member side among the plurality of joining points at which the side end edge portions are joined to each other by spot welding. Therefore, the stress concentration portion is plastically deformed at the initial stage of collision, and thus, the crush of the cylindrical body into the accordion shape smoothly starts at a low load. Thus, predetermined impact energy absorbing performance can be stably obtained from the initial stage of collision.

According to the third aspect of the invention, the cylindrical body is constituted by the paired half bodies each of which has a shape obtained by substantially symmetrically dividing the cylindrical body in half along the direction parallel to the axial direction. The cylindrical body is formed by overlapping the both of the side end edge portions of the paired half bodies, and joining them integrally with each other, by spot welding. The two side walls constituted by the both of the side end edge portions of the paired half bodies joined to each other by spot welding correspond to the first and second side walls, respectively. Thus, the crush behavior can be easily stabilized so that desired impact energy absorbing performance can be obtained, by appropriately tuning the stress concentration portion provided in the first side wall.

According to the fourth aspect of the invention, the cylindrical body includes the substantially horizontal upper side wall and the lower side wall that is inclined upward over the entire length in the axial direction so that the distance between the upper side wall and the lower side wall decreases in the direction toward the bumper member. The upper and lower side walls correspond to the first and second side walls, respectively. The entire upper side wall and the entire lower side wall form the taper portion. Even when there is the imbalance in the load transmission between the upper side wall and the lower side wall, the crush behavior can be easily stabilized, and desired impact energy absorbing performance can be stably obtained, by appropriately tuning the stress concentration portion provided in the upper side wall to which a high compression load is applied.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:

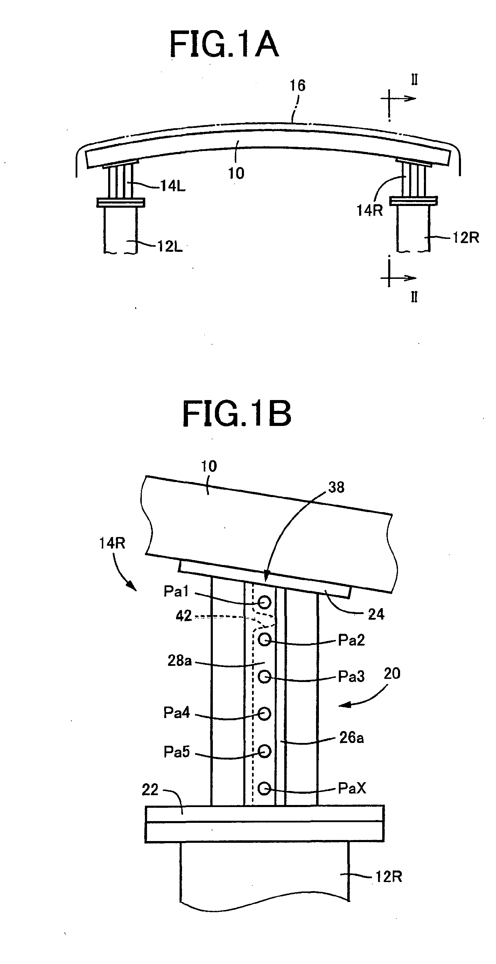

FIGS. 1A and 1B are diagram each explaining an impact absorbing member for a vehicle according to an embodiment of the invention, FIG. 1A is a schematic plane view showing an example of a manner in which the impact absorbing members for a vehicle are disposed in a vehicle, and FIG. 1B is a plane view showing the enlarged impact absorbing member for a vehicle at a right side in FIG 1A;

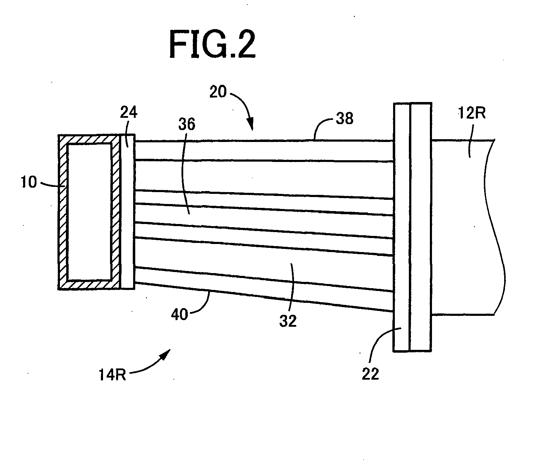

FIG. 2 is an enlarged view of a section taken along a line II-II in FIG. 1A;

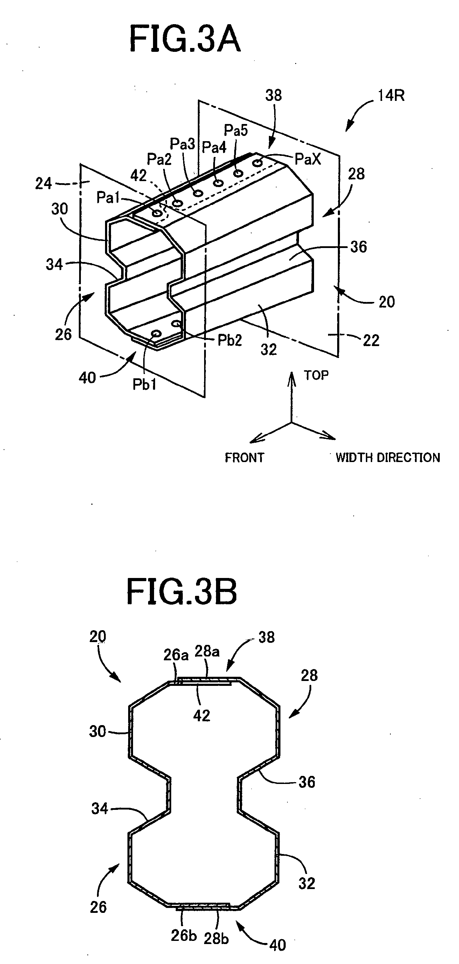

FIGS. 3A and 3B are diagram each explaining the impact absorbing member for a vehicle in FIGS. 1A and 1B, FIG. 3A is a perspective view of a cylindrical body, and FIG. 3B is a sectional view of the cylindrical body taken at a cutout portion (stress concentration portion); and

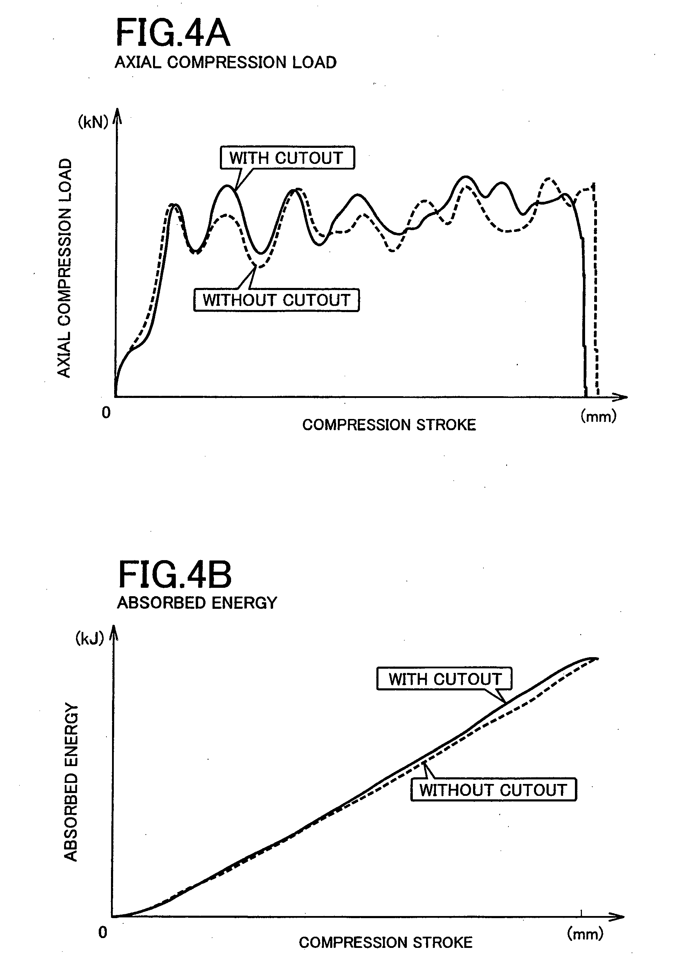

FIGS. 4A and 4B are diagrams showing results of a study on characteristics of changes in an axial compression load and absorbed energy with respect to a compression stroke in a product according to the invention in which the cutout is provided, and a comparative product in which the cutout is not provided, by conducting a weight-drop test.

### DETAILED DESCRIPTION OF EMBODIMENTS

An impact absorbing member for a vehicle according to the invention can be applied to an attachment portion of a bumper member attached to a front side of a vehicle, and an attachment portion of a bumper member attached to a rear side of the vehicle. However, the impact absorbing member for a vehicle according to the invention may be applied to only one of the bumper members attached to the front side and rear side of the vehicle.

For example, in a front bumper, the shape of the bumper member in a longitudinal direction, that is, the shape of the bumper member in a plane view seen from above the vehicle is preferably a smoothly curved shape whose center portion protrudes forward. However, the bumper member may have various shapes. For example, the bumper member may have a substantially linear shape, or only both end portions of the bumper member may be inclined rearward or curved rearward. The impact absorbing member for a vehicle according to the invention is disposed in a manner such that, for example, an axial direction of a cylindrical body coincides with a front-rear direction of the vehicle. However, the impact absorbing member for a vehicle according to the invention need not necessarily be disposed in a manner such that the axial direction of the cylindrical body strictly coincides with the front-rear direction of the vehicle, and may be disposed in a manner such that the cylindrical body is inclined in a right-left direction, or in a top-bottom direction, depending on the shape and the like of the bumper member.

The impact absorbing member for a vehicle according to the invention includes the cylindrical body and, for example, paired attachment plates that are integrally fixed to both ends of the cylindrical body in the axial direction. For example, (a) a section of the cylindrical body, which is perpendicular to the axial direction of the cylindrical body, has a flat polygonal shape, and the number of sides of the polygonal shape is an even number equal to or larger than four; and (b) a recessed groove, which is inwardly recessed, is formed along the axial direction in each of paired side walls constituting the two sides of the polygonal section, which are parallel to each other. The section of the cylindrical body may have a simple polygonal shape, such as a square shape, or the cylindrical body may have a side wall in which a portion, for example, a corner portion is curved into an arc shape or the like.

For example, the cylindrical body is formed as follows. Paired half bodies are formed by pressing a thin plate material. Each of the paired half bodies has a shape obtained by dividing the cylindrical body in half along a direction substantially parallel to the axial direction. Each of the paired half bodies has, for example, a substantially angular U-shaped section or a substantially M-shaped section. The paired half bodies are integrally joined to each other while both of side end edge portions at an open side of one of the paired half bodies are overlapped with both of side end edge portions at an open side of the other of the paired half bodies. Thus, the cylindrical body is formed. The cylindrical body may be formed by bending one thin plate material to form a predetermined polygonal section, and then, overlapping and integrally joining both side end edge portions with each other.

It is appropriate to employ spot welding, as means for joining the overlapped side end edge portions to form the cylindrical body. However, other welding means, such as arc welding, may be employed. Further, it is possible to join the side end edge portions using a joining member such as a rivet. The side end edge portions may be discontinuously joined to each other at joining points located at predetermined intervals in the axial direction. In the case where, for example, the arc welding is employed, it is possible to continuously join the side end edge portions in the axial direction. In the case where the side end edge portions are discontinuously joined to each other at the joining points by spot welding or the like, the interval between the joining points may be constant, or may be continuously increased or decreased in the axial direction, for example.

It is appropriate to provide, for example, a cutout that extends from a side end edge of one of the paired side end edge portions in a direction substantially perpendicular to the axial direction of the cylindrical body, as a stress concentration portion provided at an overlapping portion at which the side end edge portions are overlapped with each other. However, a recessed groove or a through-hole may be provided as the stress concentration portion. It is preferable that the cutout should be in the form of a slit, that is, the cutout should have a U-shape, an angular U-shape, or the like. However, the cutout may have a relatively small V-shape. Through-holes with various shapes may be employed. For example, a simple circular hole, an elliptic hole, and a long hole, such as a rectangular hole and an oval hole, may be employed.

The stress concentration portion is provided, for example, at one of the paired side end edge portions, which is located at an inner side of the cylindrical body. However, it is possible to provide the stress concentration portion at the side end edge portion located at an outer side of the cylindrical body. It is also possible to provide the stress concentration portions at both of the paired side end edge portions. In this case, when the cutouts are formed so that the cutouts are overlapped with each other, or the through-holes are formed so that the through-holes are overlapped with each other, a portion of the cylindrical body is open, and water or the like may enter the inside of the cylindrical body. However, it is possible to prevent the entry of water or the like, by closing the open portion using a seal member or the like with low strength, as needed. Although the stress concentration portion is provided at the overlapping portion at which the side end edge portions are overlapped with each other, the stress concentration portion may be provided to extend beyond the overlapping portion, as long as the stress concentration portion is located within the side wall in the form of a flat plate, that is, the stress concentration portion does not reach a ridge line of the cylindrical portion with the polygonal section.

The second aspect of the invention relates to a case where the cylindrical portion includes a taper portion in which at least a second side wall is inclined so that a distance between a first side wall and the second side wall decreases in a direction from a vehicle body-side member toward the bumper member. When implementing the first aspect of the invention, the taper shape may be such that the distance between the first side wall and the second side wall decreases in a direction from the bumper member toward the vehicle body-side member. The cylindrical body may have the taper portion in a manner such that the cylindrical body has a taper shape over an entire length thereof, or a portion of the cylindrical body, which is located on the side of the bumper member, has a taper shape. The taper portion has an asymmetric shape with respect to the axial direction. The axial direction coincides with a direction in which a compression load is applied, and generally coincides with the front-rear direction of the vehicle, which is substantially horizontal.

In the second aspect of the invention, the stress concentration portion is provided at at least a position between a first joining point that is closest to an end portion on the side of the bumper member, and a second joining point that is the second closest to the end portion. The stress concentration portion may be provided at an intermediate portion between each of all the pairs of adjacent joining points in the axial direction, or at an intermediate portion between each of several pairs of the adjacent joining points in the axial direction. Thus, the second aspect of the invention can be realized in various forms.

In the case where two side walls constituted by both of the side end edge portions of the paired half bodies are the first side wall and the second side wall as in the third aspect of the invention, the stress concentration portion may be provided in only the first side wall, or in both of the first side wall and the second side wall.

In the fourth aspect of the invention, while an upper side wall is substantially horizontal, a lower side wall is inclined upward so that a distance between the upper side wall and the lower side wall decreases in the direction toward the bumper member. Thus, imbalance in load transmission occurs between the upper side wall and the lower side wall, resulting in unstable crush behavior. Therefore, the stress concentration portion is provided in the upper side wall to which a large compression load is applied. However, when implementing the other inventions, to the contrary, the lower side wall may be substantially horizontal, and the upper side wall may be inclined downward so that the distance between the upper side wall and the lower side wall decreases in the direction toward the bumper member. In this case, the lower side wall is the first side wall. Thus, the paired side end edge portions are overlapped with each other, and integrally joined to each other, in the lower side wall, and the stress concentration portion(s) is(are) provided in the side end edge portion(s). Similarly, the invention may be applied to the other side walls, such as right and left side walls. That is, the invention is applied to paired side wall portions between which the imbalance in load transmission occurs.

### Embodiment

Hereinafter, an embodiment of the invention will be described in detail with reference to the drawings. FIGS. 1A and 1B are diagrams each explaining an impact absorbing member for a vehicle according to an embodiment of the invention. FIG. 1A is a schematic plane view of a portion near a bumper beam 10 at a front side of a vehicle, which is seen from above the vehicle. Crush boxes 14R and 14L, each of which serves as the impact absorbing member for a vehicle, are disposed at front end portions of right and left side members 12R and 12L. Right and left end portions of the bumper beam 10 are fixed to the crush boxes 14R and 14L, respectively. FIG. 1B is a plane view showing an enlarged crush box 14R at the right side. The crush box 14R includes a hollow cylindrical body 20 that has a plurality of side walls in the form of flat plates, and has a polygonal section; and paired attachment plates 22 and 24 that are integrally welded and fixed to the respective end portions of the cylindrical body 20 in the axial direction. The crush box 14R is fixed to the side member 12R and the bumper beam 10 using bolts or the like (not shown) through the attachment plates 22 and 24 in a manner such that the axial direction of the cylindrical body 20 is substantially parallel to the front-rear direction of the vehicle.

When an impact is applied from ahead of the vehicle, and the crush box 14R receives an axial compression load, the cylindrical body 20 is crushed into an accordion shape. At this time, the deformation absorbs the impact energy, and reduces the impact applied to structural members of the vehicle, such as the side member 12R. The cylindrical body 20 is crushed into the accordion shape, because a plurality of portions of the cylindrical body 20 are sequentially buckled (that is, a plurality of portions of the cylindrical body 20 are sequentially bent into a V-shape). In general, buckling starts from a portion of the cylindrical body 20, which is located on the side of the bumper beam 10, that is, an input-side portion of the cylindrical body 20. Then, buckling proceeds in a direction toward a vehicle body, as time passes. The bumper beam 10 functions as a reinforcement member and an attachment member of a bumper. A bumper body 16 made of synthetic resin or the like is integrally attached to the bumper beam 10. The bumper beam 10 corresponds to the bumper member. The side members 12R and 12L correspond to the vehicle body-side member. The crush box 14L at the left side is symmetrical to the crush box 14R at the right side, and the crush box 14L has the same advantageous effects as those of the crush box 14R. Therefore, in the following description, the crush box 14R at the right side will be specifically described.

FIG. 2 is an enlarged view of a section taken along a line II-II in FIG. 1A. FIGS. 3A and 3B are diagrams each showing only the crush box 14R. FIG. 3A is a perspective view obliquely seen from ahead of the vehicle. FIG. 3B is a sectional view of the cylindrical body 20 taken along a plane perpendicular to the axial direction (i.e., a sectional view seen from ahead of the vehicle). The section of the cylindrical body 20 perpendicular to the axial direction is long in the top-bottom direction, and has a flat polygonal shape (an octagonal shape in the embodiment). Recessed grooves 34 and 36 are formed at center portions of paired right and left side walls 30 and 32 with large width, which constitute two sides of the polygonal section, which are parallel to each other. Each of the recessed grooves 34 and 36 is inwardly recessed, and extends in the axial direction (in a precise sense, the recessed groove is slightly inclined in the top-bottom direction as shown in FIG. 2). As evident from FIG. 2, the size of the bumper beam 10 in the top-bottom direction is smaller than the size of the side member 12R in the top-bottom direction. Therefore, while an upper side wall 38, which is located at an upper portion of the cylindrical body 20, and extends in the front-rear direction of the vehicle, is substantially horizontal, a lower side wall 40, which is located at a lower portion of the cylindrical body 20, is inclined upward so that a distance between the upper side wall 38 and the lower side wall 40 decreases in a direction toward the bumper beam 10, in accordance with the difference in the size. That is, while the upper side wall 38 is substantially horizontal, the lower side wall 40 is inclined upward in a direction from an end portion on the side of the side member 12R toward an end portion on the side of the bumper beam 10, and thus, the cylindrical body 20 has a taper shape. In a side view shown in FIG. 2, the upper side wall 38 and the lower side wall 40 over an entire length thereof in the axial direction form an asymmetric taper portion, with respect to the axial direction that is substantially horizontal. In the embodiment, the substantially horizontal upper side wall 38 corresponds to the first side wall. The lower side wall 40, which is inclined with respect to the axial direction (horizontal direction) more greatly than the upper side wall 38, corresponds to the second side wall.

As evident from FIGS. 3A and 3B, the cylindrical body 20 is constituted by paired half bodies 26 and 28. Each of the paired half bodies 26 and 28 has a shape obtained by substantially symmetrically dividing the cylindrical body 20 into right and left halves along a direction substantially parallel to the axial direction. Thus, each of the paired half bodies 26 and 28 has a substantially M-shaped section. Each of the half bodies 26 and 28 is formed, for example, by pressing and bending a thin plate material. Side end edge portions 26a and 28a at the open sides of the paired half bodies 26 and 28 are overlapped with each other by a predetermined width, and integrally joined to each other. Also, side end edge portions 26b and 28b at the open sides of the paired half bodies 26 and 28 are overlapped with each other by the predetermined width, and integrally joined to each other. Thus, a closed polygonal section is formed. The paired side end edge portions 26a and 28a constitute the upper side wall 38, and the paired side end edge portions 26b and 28b constitute the lower side wall 40. The paired side end edge portions 26a and 28a are discontinuously joined to each other at joining points located at predetermined intervals in the axial direction by spot welding, and the paired side end edge portions 26b and 28b are discontinuously joined to each other at joining points located at predetermined intervals in the axial direction by spot welding. In FIG. 1B and FIG. 3A, joining points Pa1 to PaX, and Pb1 to PbX (joining points Pb3 to PbX are not shown) indicated by circle marks are positions at which the side end edge portions are joined to each other by the spot welding. In the embodiment, the side end edge portions are joined to each other at the joining points located at substantially equal intervals. The joining point Pa1 is the first joining point closest to the bumper beam 10. The joining point Pa2 is the second joining point that is second closest to the bumper beam 10. In the embodiment, the number X of joining points is 6. In each of the upper side wall 38 and the lower side wall 40, spot welding is performed at 6 joining points. The positions of the joining points in the upper side wall 38 in the axial direction are substantially the same as the positions of the joining points in the lower side wall 40 in the axial direction. The number X of the joining points and the interval between the joining points are appropriately set according to, for example, the length of the cylindrical body 20.

In the upper side wall 38 constituted by the paired side end edge portions 26a and 28a, a stress concentration portion 42 is provided such that the stress concentration portion 42 does not reach a ridge line of the cylindrical body 20 with the polygonal section. When the cylindrical body 20 is crushed into the accordion shape, the stress concentration portion 42 serves as a starting point at which plastic deformation starts. The stress concentration portion 42 is a cutout in the form of a slit, which is provided at the side end edge portion 26a located at the inner side of the upper side wall 38. The stress concentration portion 42 is formed in a U-shape at an intermediate position between the joining points Pa1 and Pa2, and extends from the side end edge of the side end edge portion 26a in a direction substantially perpendicular to the axial direction. The stress concentration portion 42 is provided to extend to cross a joining line that connects the joining points Pa1 to PaX. In the embodiment, the stress concentration portion 42 is provided in only the upper side wall 38 to which a relatively high load is applied. However, it is possible to provide a similar stress concentration portion in the lower side wall 40 as well, as needed.

Because the stress concentration portion 42 is provided, local strength at the stress concentration portion 42 is low as compared to the joining point Pa1 ahead of the stress concentration portion 42, and the joining point Pa2 behind the stress concentration portion 42. Therefore, when the axial compression load is applied, a portion near the stress concentration portion 42 is plastically deformed so that the portion is bent into a V-shape. The plastically deformed portion serves as a starting point at which deformation starts. Thus, the crush of the cylindrical body 20 into the accordion shape smoothly starts at a low load. Strength is relatively high at portions near the joining points Pa1 to PaX, and Pb1 to PbX. Therefore, portions at the intermediate positions between the adjacent joining points among the joining points Pa1 to PaX, and Pb1 to PbX in the axial direction are sequentially bent into a V-shape, from the portions closest to the bumper beam 10. Thus, the crush proceeds, and the cylindrical body 20 is crushed into the accordion shape. The crush proceeds in a direction toward the side member 12R in a chain reaction, due to an impact caused by buckling (crush) of a front portion in which the stress concentration portion 42 is provided. An additional stress concentration portion (such as a cutout) may be provided at at least one intermediate position between adjacent joining points among the joining points Pa2 to PaX, as needed. In this case, buckling is accelerated or stabilized. It is possible to provide a stress concentration portion (such as a cutout) at at least one intermediate position between adjacent joining points among the joining points Pb1 to PbX in the lower side wall 40. In the embodiment, while the upper side wall 38 is substantially horizontal, the lower side wall 40 is inclined upward in the direction toward the bumper beam 10, and thus, the upper side wall 38 and the lower side wall 40 form an asymmetric taper shape. Therefore, imbalance in load transmission is easy to occur between the side walls 38 and 40, and thus, crush behavior is easy to be unstable. However, it is possible to stabilize the crush behavior while ensuring desired impact energy absorbing performance, by appropriately tuning (adjusting) the position, size, shape, and the like of the stress concentration portion 42 provided in the upper side wall 38.

As described above, in the crush box 14R in the embodiment, the stress concentration portion 42 is provided at the overlapping portion at which the side end edge portions 26a and 28a are overlapped with each other in the upper side wall 38 in the form of a flat plate such that the stress concentration portion 42 does not reach the ridge line of the cylindrical body 20 with the polygonal section. Therefore, as compared to the case where the stress concentration portion is provided to include the ridge line of the cylindrical body with the polygonal section, or the stress concentration portion is provided in a side wall portion constituted by one plate material (for example, a right side wall 32 or a left side wall 30), influence on the impact energy absorbing performance (i.e., the axial crush strength of the cylindrical body 20) is small. Thus, it is possible to easily tune the shape, size, and the like of the stress concentration portion 42 to stabilize the crush behavior, while ensuring desired impact energy absorbing performance. The upper side wall 38 and the lower side wall 40 constitute the asymmetric taper portion, and the inclination of the upper side wall 38 with respect to the axial direction is substantially 0, and thus, a large compression load is applied to the upper side wall 38. Therefore, it is possible to appropriately change the crush behavior by tuning the stress concentration portion 42 provided in the upper side wall 38. Thus, in the cylindrical body 20 with the asymmetric taper shape whose crush behavior is easy to be unstable due to the imbalance in the load transmission, the crush behavior is easily stabilized by tuning the stress concentration portion 42, and desired impact energy absorbing performance is stably obtained.

In the embodiment, the lower side wall 40 is inclined upward so that the distance between the upper side wall 38 and the lower side wall 40 decreases in the direction from the side member 12R toward the bumper beam 10. The side end edge portions 26a and 28a in the upper side wall 38 are discontinuously joined to each other at the joining points located at the predetermined intervals in the axial direction by spot welding. The stress concentration portion 42 is provided between the first joining point Pa1 that is closest to the bumper beam 10 and the second joining point Pa2 that is the second closest to the bumper beam 10 among the plurality of joining points Pa1 to PaX at which the side end edge portions 26a and 28a are joined to each other by spot welding. Therefore, the stress concentration portion 42 is plastically deformed at the initial stage of collision, and thus, the crush of the cylindrical body 20 into the accordion shape smoothly starts at a low load. Thus, predetermined impact energy absorbing performance is stably obtained from the initial stage of collision.

In the embodiment, the cylindrical body 20 is constituted by the paired half bodies 26 and 28 each of which has a shape obtained by substantially symmetrically dividing the cylindrical body 20 in half along the direction parallel to the axial direction. The cylindrical body 20 is formed by overlapping and joining the side end edge portions 26a and 28a of the paired half bodies 26 and 28 integrally with each other, and overlapping and joining the side end edge portions 26b and 28b of the paired half bodies 26 and 28 integrally with each other, by spot welding. The upper side wall 38 constituted by the side end edge portions 26a and 28a joined to each other by spot welding corresponds to the first side wall. The lower side wall 40 constituted by the side end edge portions 26b and 28b joined to each other by spot welding corresponds to the second side wall. Thus, the crush behavior can be easily stabilized so that desired impact energy absorbing performance can be obtained, by appropriately tuning the stress concentration portion 42 provided in the upper side wall 38 to which a relatively high load is applied.

In the embodiment, the cylindrical body 20 includes the substantially horizontal upper side wall 38 and the lower side wall 40 that is inclined upward over the entire length in the axial direction so that the distance between the upper side wall 38 and the lower side wall 40 decreases in the direction toward the bumper beam 10. Thus, the cylindrical body 20 has the asymmetric taper shape. The entire upper side wall 38 and the entire lower side wall 40 form the taper portion. Even when there is the imbalance in the load transmission between the upper side wall 38 and the lower side wall 40, the crush behavior can be easily stabilized, and desired impact energy absorbing performance can be stably obtained, by appropriately tuning the stress concentration portion 42 provided in the upper side wall 38 to which a high compression load is applied.

For comparison, a weight-drop test was conducted by freely dropping a weight under a test condition described below, using the crush box 14R in the embodiment, and a comparative product in which the stress concentration portion 42 is not provided. Thus, the characteristics of changes in the axial compression load and absorbed energy with respect to a compression stroke were studied. FIGS. 4A and 4B show obtained results.
Test condition
Weight of a weight body: 1100 kg
Height from which the weight body is dropped: 1.11 m
Collision speed: 17 km/h

In each of FIGS. 4A and 4B, a solid line labeled "WITH CUTOUT" shows the characteristic of the product according to the invention (i.e., the crush box 14R), and a dash line labeled "WITHOUT CUTOUT" shows the characteristic of the comparative product. In the case of the comparative product (in which the cutout is not provided), the axial compression load at the initial stage of collision is low, particularly the second load peak value is low, and a difference between the second load peak value and the third load peak value is large. Thus, repeated buckling wave forms are unstable. This makes the subsequent repeated buckling unstable, resulting in a decrease in the amount of absorbed energy. In contrast, in the case of the product according to the invention (in which the cutout is provided), the second load peak value is substantially equal to the third load peak, and thus, the wave forms are stable. Further, the amount of absorbed energy is increased, as compared to the comparative product in which the cutout is not provided. Note that the absorbed energy in FIG 4B corresponds to the integral of the axial compression load in FIG. 4A.

Although the embodiment of the invention has been described in detail with reference to the drawings, the embodiment is merely an example, and the invention can be implemented in various forms obtained by altering or modifying the embodiment based on the knowledge of those skilled in the art.

## Claims

1. An impact absorbing member (14L, 14R) for a vehicle, which includes a hollow cylindrical body (20) that has a plurality of side walls in a form of flat plates and has a polygonal section, wherein the impact absorbing member is disposed between a vehicle body-side member (12L, 12R) and a bumper member (10), in a manner such that an axial direction of the cylindrical body coincides with a front-rear direction of a vehicle, and the impact absorbing member absorbs impact energy by being crushed into an accordion shape when the impact absorbing member receives a compression load in the axial direction,
the cylindrical body comprising
paired side end edge portions (26a, 26b, 28a, 28b) overlapped with each other by a predetermined width in a first side wall (38) in a form of a flat plate, and integrally joined to each other along the axial direction, whereby forming the closed polygonal section;
**characterized in that**
the cylindrical body includes an asymmetric taper portion in which a second side wall (40), which is located on a side opposite to the first side wall to face the first side wall, is inclined in the axial direction more greatly with respect to the axial direction than the first side wall; and
a stress concentration portion (42) is provided at an overlapping portion at which the side end edge portions are overlapped with each other in the first side wall such that the stress concentration portion does not reach a ridge line of the cylindrical body with the polygonal section, and serves as a starting point at which plastic deformation starts when the impact absorbing member is crushed into the accordion shape.

2. The impact absorbing member (14L, 14R) for a vehicle according to claim 1, wherein
in the taper portion, at least the second side wall (40) is inclined with respect to the axial direction so that a distance between the first side wall (38) and the second side wall decreases in a direction from the vehicle body-side member (12L, 12R) toward the bumper member (10);
the paired side end edge portions (26a, 26b, 28a, 28b) in the first side wall are discontinuously joined to each other at joining points located at predetermined intervals in the axial direction by spot welding; and
the stress concentration portion (42) is provided at at least a position between a first joining point (Pa1) that is closest to an end portion on a side of the bumper member, and a second joining point (Pa2) that is the second closest to the end portion, among a plurality of joining points at which the paired side end edge portions are joined to each other by the spot welding.

3. The impact absorbing member (14L, 14R) for a vehicle according to claim 1 or 2, wherein
the cylindrical body (20) is constituted by paired half bodies (26, 28) each of which has a shape obtained by substantially symmetrically dividing the cylindrical body in half along a direction parallel to the axial direction, and the cylindrical body is formed by overlapping both of the side end edge portions (26a, 26b, 28a, 28b) of one of the paired half bodies with the both of the side end edge portions of other of the paired half bodies, respectively, to form a cylindrical shape, and integrally joining the both of the side end edge portions of the one of the paired half bodies to the both of the side end edge portions of the other of the paired half bodies, respectively, by spot welding; and
two side walls constituted by the both of the side end edge portions of the paired half bodies joined by the spot welding are the first side wall (38) and the second side wall (40).

4. The impact absorbing member (14L, 14R) for a vehicle according to any one of claims 1 to 3, wherein
the cylindrical body (20) includes a substantially horizontal upper side wall that is located at an upper position and extends in the front-rear direction of the vehicle, and a lower side wall that is located at a lower position, and is inclined upward over an entire length in the axial direction so that a distance between the upper side wall and the lower side wall decreases in a direction toward the bumper member (10), and
the upper side wall is the first side wall (38), the lower side wall is the second side wall (40), and the entire upper side wall and the entire lower side wall form the taper portion.

## Patentansprüche

1. Einen Aufprall aufnehmendes Element (14L, 14R) für ein Fahrzeug, das einen hohlen zylindrischen Körper (20) hat, der eine Vielzahl Seitenwände in Form von flachen Platten und einen Polygonabschnitt aufweist, wobei das den Aufprall aufnehmende Element zwischen einem fahrzeugkörperseitigen Element (12L, 12R) und einem Stoßstangenelement (10) in einer Weise derart vorgesehen ist, dass eine axiale Richtung des zylindrischen Körpers mit einer Richtung des Fahrzeugs von vorne nach hinten zusammenfällt und das den Aufprall aufnehmende Element eine Aufprallenergie aufnimmt, indem es in einer Akkordeonform zusammengedrückt wird, wenn das den Aufprall aufnehmende Element eine Verdichtungslast in der axialen Richtung empfängt,
wobei der zylindrische Körper umfasst
gepaarte Seitenendkantenabschnitte (26a, 26b, 28a, 28b), die miteinander um eine vorbestimmte Breite in einer ersten Seitenwand (38) in einer Form einer flachen Platte überlappen und entlang der axialen Richtung einstückig aneinander gefügt sind, wobei der geschlossene Polygonabschnitt ausgebildet wird;
**dadurch gekennzeichnet, dass**
der zylindrische Körper einen asymmetrischen abgeschrägten Abschnitt hat, in dem eine zweite Seitenwand (40), die an einer Seite gegenüber der ersten Seitenwand angeordnet ist, um zu der ersten Seitenwand gerichtet zu sein, in der axialen Richtung stärker mit Bezug auf die axiale Richtung als die erste Seitenwand geneigt ist; und
ein Spannungskonzentrationsabschnitt (42) an einem überlappenden Abschnitt bereitgestellt ist, an dem die Seitenendkantenabschnitte miteinander in der ersten Seitenwand derart überlappt sind, dass der Spannungskonzentrationsabschnitt eine Firstlinie des zylindrischen Körpers mit dem Polygonabschnitt nicht erreicht, und als Anfangspunkt dient, an dem eine plastische Verformung beginnt, wenn das den Aufprall aufnehmende Element in die Akkordeonform zusammengedrückt wird.

2. Einen Aufprall aufnehmendes Element (14L, 14R) für ein Fahrzeug nach Anspruch 1, wobei
in dem abgeschrägten Abschnitt zumindest die zweite Seitenwand (40) mit Bezug auf die axiale Richtung so geneigt ist, dass ein Abstand zwischen der ersten Seitenwand (38) und der zweiten Seitenwand sich in einer Richtung von dem fahrzeugkörperseitigen Element (12L, 12R) zu dem Stoßfängerelement (10) hin verringert;
die gepaarten Seitenendkantenabschnitte (26a, 26b, 28a, 28b) in der ersten Seitenwand diskontinuierlich miteinander an Fügepunkten gefügt sind, die an vorbestimmten Abständen in der axialen Richtung angeordnet sind, durch Punktschweißen; und
der Spannungskonstruktionsabschnitt (42) an zumindest einer Position zwischen einem ersten Fügepunkt (Pa1), der am nächsten an einem Endabschnitt an einer Seite des Stoßfängerelements liegt, und einem zweiten Fügepunkt (Pa2), der am zweitnächsten zu dem Endabschnitt liegt, unter einer Vielzahl von Fügepunkten, an denen die gepaarten Seitenendkantenabschnitte miteinander durch das Punktschweißen gefügt sind, bereitgestellt ist.

3. Einen Aufprall aufnehmendes Element (14L, 14R) für ein Fahrzeug nach Anspruch 1 oder 2, wobei
der zylindrische Körper (20) durch gepaarte Halbkörper (26, 28) bestimmt ist, die jeweils eine Form aufweisen, die durch ein im Wesentlichen symmetrisches Teilen des zylindrischen Körpers in eine Hälfte entlang einer Richtung parallel zu der axialen Richtung erhalten wird, und der zylindrische Körper durch Überlappen von beiden Seitenendkantenabschnitten (26a, 26b, 28a, 28b) von einem der gepaarten Haltkörper mit beiden Seitenendkantenabschnitten des anderen der gepaarten Halbkörper entsprechend, um eine zylindrische Form auszubilden, und einstückiges Fügen der beiden Seitenendkantenabschnitte des einen der gepaarten Halbkörper zu den beiden Seitenendkantenabschnitten des anderen der gepaarten Halbkörper entsprechend durch Punktschweißen ausgebildet wird; und
zwei Seitenwände, die durch beide Seitenendkantenabschnitte der gepaarten Halbkörper bestimmt sind, die durch das Punktschweißen gefügt sind, die erste Seitenwand (38) und die zweite Seitenwand (40) sind.

4. Einen Aufprall aufnehmendes Element (14L, 14R) für ein Fahrzeug nach einem der Ansprüche 1 bis 3, wobei
der zylindrische Körper (20) eine im Wesentlichen horizontale obere Seitenwand hat, die an einer oberen Position angeordnet ist und sich in der Richtung des Fahrzeugs von vorne nach hinten erstreckt, und eine untere Seitenwand, die an einer unteren Position angeordnet ist und die über eine gesamte Länge in der axialen Richtung nach oben geneigt ist, so dass ein Abstand zwischen der oberen Seitenwand und der unteren Seitenwand sich in einer Richtung zu dem Stoßfängerelement (10) hin verringert, und
die obere Seitenwand die erste Seitenwand (38) ist, die untere Seitenwand die zweite Seitenwand (40) ist und die gesamte obere Seitenwand und die gesamte untere Seitenwand den abgeschrägten Abschnitt ausbilden.

## Revendications

1. Elément d'absorption d'impact (14L, 14R) pour un véhicule, qui comporte un corps cylindrique creux (20) qui présente une pluralité de parois latérales ayant une forme de plaques plates et qui présente une section polygonale, où l'élément d'absorption d'impact est disposé entre un élément latéral de carrosserie de véhicule (12L, 12R) et un élément de pare-chocs (10), d'une manière telle qu'une direction axiale du corps cylindrique coïncide avec une direction avant-arrière d'un véhicule, et l'élément d'absorption d'impact absorbe une énergie d'impact en étant écrasé en une forme d'accordéon lorsque l'élément d'absorption d'impact reçoit une charge de compression dans la direction axiale,
le corps cylindrique comprenant :
des parties de bord d'extrémité latérale appariées (26a, 26b, 28a, 28b) qui se chevauchent l'une avec l'autre par une largeur prédéterminée dans une première paroi latérale (38) en une forme de plaque plate, et assemblées d'un seul tenant l'une avec l'autre le long de la direction axiale, moyennant quoi la section polygonale fermée est formée ;
**caractérisé en ce que**
le corps cylindrique comporte une partie conique asymétrique dans laquelle une deuxième paroi latérale (40), qui est située sur un coté opposé à la première paroi latérale de manière à faire face à la première paroi latérale, est inclinée dans la direction axiale de façon plus importante par rapport à la direction axiale que la première paroi latérale ; et
une partie de concentration de contraintes (42) est prévue au niveau d'une partie de chevauchement au niveau de laquelle les parties de bord d'extrémité latérale se chevauchent l'une avec l'autre dans la première paroi latérale de telle sorte que la partie de concentration de contraintes n'atteigne pas une ligne de crête du corps cylindrique avec la section polygonale, et qu'elle serve de point de départ au niveau duquel une déformation plastique commence lorsque l'élément d'absorption d'impact est écrasé en forme d'accordéon.

2. Elément d'absorption d'impact (14L, 14R) pour un véhicule selon la revendication 1, dans lequel
dans la partie conique, au moins la deuxième paroi latérale (40) est inclinée par rapport à la direction axiale de sorte qu'une distance entre la première paroi latérale (38) et la deuxième paroi latérale diminue dans une direction depuis l'élément latéral de carrosserie de véhicule (12L, 12R) vers l'élément de pare-chocs (10) ;
les parties de bord d'extrémité latérale appariées (26a, 26b, 28a, 28b) dans la première paroi latérale sont assemblées l'une avec l'autre de manière discontinue au niveau de points de jonction situés à des intervalles prédéterminés dans la direction axiale par soudage par points ; et
la partie de concentration de contraintes (42) est prévue au niveau d'au moins une position entre un premier point de jonction (Pa1) qui est le plus proche d'une partie d'extrémité sur un coté de l'élément de pare-chocs, et un deuxième point de jonction (Pa2) qui est le deuxième point le plus proche de la partie d'extrémité, parmi une pluralité de points de jonction au niveau desquels les parties de bord d'extrémité latérale appariées sont assemblées l'une avec l'autre par le soudage par points.

3. Elément d'absorption d'impact (14L, 14R) pour un véhicule selon la revendication 1 ou 2, dans lequel
le corps cylindrique (20) est constitué de demi-corps appariés (26, 28) chacun desquels présente une forme obtenue en divisant de manière essentiellement symétrique le corps cylindrique en deux le long d'une direction parallèle à la direction axiale, et le corps cylindrique est formé en superposant les deux parties de bord d'extrémité latérale (26a, 26b, 28a, 28b) de l'un des demi-corps appariés avec les deux parties de bord d'extrémité latérale de l'autre demi-corps des demi-corps appariés, respectivement, pour former une forme cylindrique, et en assemblant d'un seul tenant les deux parties de bord d'extrémité latérale de l'un des demi-corps appariés avec les deux parties de bord d'extrémité latérale de l'autre demi-corps des demi-corps appariés, respectivement, par soudage par points ; et
deux parois latérales constituées par les deux parties de bord d'extrémité latérale des demi-corps appariés assemblées par le soudage par points sont la première paroi latérale (38) et la deuxième paroi latérale (40).

4. Elément d'absorption d'impact (14L, 14R) pour un véhicule selon l'une quelconque des revendications 1 à 3, dans lequel
le corps cylindrique (20) comporte une paroi latérale supérieure sensiblement horizontale qui est située au niveau d'une position supérieure et s'étend dans la direction avant-arrière du véhicule, et une paroi latérale inférieure qui est située au niveau d'une position inférieure, et qui est inclinée vers le haut sur une longueur entière dans la direction axiale de sorte qu'une distance entre la paroi latérale supérieure et la paroi latérale inférieure diminue dans une direction vers l'élément de pare-chocs (10), et
la paroi latérale supérieure est la première paroi latérale (38), la paroi latérale inférieure est la deuxième paroi latérale (40), et la paroi latérale supérieure entière et la paroi latérale inférieure entière forment la partie conique.
